# EUROPÄISCHE PATENTANMELDUNG

(11) **EP 2 143 607 A2**
(43) Veröffentlichungstag der Anmeldung: **13.01.2010**
(21) Anmeldenummer: 09163065.7
(22) Anmeldetag: 18.06.2009
(51) Int. Cl.: B60T 10/02, F01P 3/20, F16D 65/78

(54) **Kühlsystem für ein Fahrzeug**

(30) Priorität: 09.07.2008 DE 102008040283
(71) Anmelder: ZF Friedrichshafen AG, 88038 Friedrichshafen (DE)
(72) Erfinder: Reisch, Bernhard, 88316 Isny (DE); Schmidtner, Peter, 88131 Lindau (DE); Huhn, Dirk, 88048 Friedrichshafen (DE)

(57) **Zusammenfassung**

Es wird eine Anordnung mit zumindest einem Kühlsystem für ein Fahrzeug und mit einer hydrodynamischen Strömungsmaschine, insbesondere mit einer Strömungsbremse oder mit einer Strömungskupplung, vorgeschlagen, wobei die Strömungsmaschine zur Wärmeabfuhr mit dem Kühlsystem gekoppelt ist, und wobei zumindest eine Staudruckmesseinrichtung (1) zur Unterstützung der Steuerung und/oder Regelung der Leistung der Strömungsmaschine vorgesehen ist.

## Beschreibung

Die vorliegende Erfindung betrifft eine Anordnung mit zumindest einem Kühlsystem für ein Fahrzeug und mit einer hydrodynamischen Strömungsmaschine gemäß der im Oberbegriff des Patentanspruches 1 näher definierten Art.

Aus der Fahrzeugtechnik sind hydrodynamische Strömungsmaschinen, insbesondere Strömungsbremsen beziehungsweise Retarder hinreichend bekannt. Während des Betriebes der Strömungsbremse fällt je nach angeforderter Bremsleistung eine nicht unerhebliche Wärmemenge an. Die anfallende Wärmemenge muss aus dem System abgeführt werden, um eine Überhitzung und deren Folgeschäden zu vermeiden. Die Abfuhr der Wärme aus dem Bremsmedium erfolgt in der Regel über einen Wärmetauscher, der in ein Kühlsystem eingebunden ist. Der Wärmetauscher ermöglicht eine Übertragung der Wärmeenergie von dem Bremsmedium zum Kühlmittel. Das Kühlmittel wiederum überträgt die aufgenommene Wärme über den Fahrzeugkühler an die Umgebungsluft. Je nach ausgelegter Kühlkapazität des Kühlsystems muss die Bremsleistung des Retarders geregelt werden, da zum einen die Gefahr der Überhitzung des Motors des Fahrzeuges und zum anderen die Gefahr der Entstehung von Kavitation im Kühlmittel gegeben ist. Somit hängt die zugelassene Bremsleistung des Retarders im Wesentlichen von der zur Verfügung stehenden Kühlleistung des Fahrzeuges ab.

Die Kühlleistung wiederum ist unter anderem abhängig von der Kühlmittelmenge und damit von der Motordrehzahl beziehungsweise der Drehzahl der Kühlmittelpumpe. Bestehende Regelungsstrateglen basieren hauptsächlich auf der Erfassung der Motordrehzahl, mit welcher dann über ein abgelegtes Kühlmittelmengen-Kennfeld auf den Kühlmittelvolumenstrom geschlossen wird. Beispielsweise ist aus der Druckschrift EP 0 699 144 B1 ein derartiges Verfahren bekannt. Bei dem Verfahren wird ein elektrisches Steuergerät verwendet, um die Bremsleistung des Retarders zu steuern. Das Steuergerät empfängt Signale über einen Drehzahlsensor, um die verwendbare Bremsleistung in Abhängigkeit von der Drehzahl des Motors des Fahrzeuges anzusteuern. Es hat sich jedoch gezeigt, dass teilweise eine sehr große Diskrepanz zwischen dem aus der Drehzahl des Motors theoretisch berechneten Kühlmittelvolumenstrom und dem tatsächlich ermittelten Volumenstrom auftritt. Aus diesem Grund kann eine Überhitzung oder auch das Auftreten von Kavitation im Kühlsystem nicht ausreichend zuverlässig mit dem bekannten Verfahren verhindert werden.

Ferner ist aus der Druckschrift DE 197 16 919 bekannt, dass die Bremsleistung des Retarders in Abhängigkeit der zur Verfügung stehenden Kühlleistung eingestellt wird, wobei die maximal zulässige Kühlleistung in Abhängigkeit von der Umgebungstemperatur, der Gehäusetemperatur und weiteren Größen festgelegt wird. Aus der Druckschrift DE 100 09 959 ist zudem bekannt, dass das Bremsmoment in Abhängigkeit von der Fahrzeuggeschwindigkeit eingestellt wird. Die Fahrzeuggeschwindigkeit kann entweder aus der Drehzahl am Abtrieb oder durch die Erfassung der Drehzahl der Räder des Fahrzeuges ermittelt werden.

Bei den bekannten Verfahren ergibt sich der Nachteil, dass die Kühlleistung nur mittelbar über Kennfelder bestimmt werden kann. Dabei wird ein auftretender Verschleiß oder ein sich verringernder Wirkungsgrad beispielsweise der Kühlmittelpumpe nicht berücksichtigt, so dass die theoretische Ermittlung der Kühlleistung zu ungenau ist.

Der vorliegenden Erfindung liegt die Aufgabe zu Grunde, eine Anordnung mit zumindest einem Kühlsystem für ein Fahrzeug und mit einer hydrodynamischen Strömungsmaschine, insbesondere einer Strömungsbremse, der eingangs beschriebenen Gattung vorzuschlagen, welche eine möglichst exakte Bestimmung der Kühlleistung ermöglicht, um die Leistungsansteuerung der Strömungsmaschine zu verbessern.

Diese Aufgabe wird erfindungsgemäß durch die Merkmale des Patentanspruches 1 gelöst. Weitere vorteilhafte Ausgestaltungen ergeben sich aus den Unteransprüchen und der Zeichnung.

Erfindungsgemäß wird eine Anordnung mit zumindest einem Kühlsystem für ein Fahrzeug und mit einer hydrodynamischen Strömungsmaschine vorgeschlagen, wobei die Strömungsmaschine zur Wärmeabfuhr mit dem Kühlsystem oder dergleichen gekoppelt ist. Zur Unterstützung der Steuerung und/oder Regelung der Leistung der Strömungsmaschine ist zumindest eine Staudruckmesseinrichtung oder dergleichen zum Ermitteln eines aktuell herrschenden Staudruckes z. B. in der Strömung des Kühlmittels, des Bremsmediums oder dergleichen vorgesehen.

Auf diese Weise kann mit der Staudruckmesseinrichtung der jeweils vorliegende Staudruck vorzugsweise in dem Kühlmittel gemessen werden, so dass anhand des Staudruckes beziehungsweise des dynamischen Druckanteils in Abhängigkeit des vorgegebenen Querschnittes des Kühlmittelkanals jederzeit exakt der Volumenstrom in dem Kühlmittelkanal ermittelt werden kann. Mit der Kenntnis des aktuellen Kühlmittelvolumenstromes und unter Einbeziehung der bereits vorhandenen Temperatur auf der Ölaustrittsseite und der Kühlmittelaustrittsseite kann zum Beispiel eine hydrodynamische Strömungsbremse beziehungsweise ein Retarder derart hinsichtlich seiner Bremsleistung angesteuert werden, dass eine Überhitzung des Motors und die Gefahr der Entstehung von Kavitation im Kühlsystem sicher verhindert werden kann.

Dadurch, dass der gemessene Volumenstrom als Steuer und/oder Regelgröße zur Verfügung steht, kann eine exaktere Regelung ermöglicht werden.

Gemäß einer möglichen Weiterbildung der Erfindung kann vorgesehen sein, dass die Staudruckmesseinrichtung zum Messen des Staudruckes beziehungsweise des dynamischen Druckanteils zumindest abschnittsweise mit wenigstens einem Messrohr oder dergleichen in die Strömung des Kühlmittels geführt ist, um den aktuellen Kühlmittelvolumenstrom zu ermitteln. Diese Art der Messung hat den besonderen Vorteil, dass dabei nahezu kein Druckverlust in dem Kühlmittelkanal auftritt, so dass die Störung des Kühlmittelvolumenstromes im Vergleich zu anderen Messarten sehr gering und somit vernachlässigbar ist.

Vorzugsweise kann ein Messrohr der Staudrucksonde in einem Kühlmittelkanal und/oder in einem Rohr beliebigen Querschnittes eines Wärmetauschers des Kühlmittelkreislaufes angeordnet sein, wobei auch andere geeignete Einbaustellen verwendet werden können.

Eine andere Ausgestaltung der Erfindung kann vorsehen, dass die Staudruckmesseinrichtung zum Messen des Staudruckes zumindest abschnittweise mit zumindest einem Messrohr in die Strömung des Bremsmediums oder dergleichen der Strömungsbremse geführt ist, um den aktuellen Bremsmediumvolumenstrom zu ermitteln. Somit kann auch der Volumenstrom des Bremsmediums, z.B. des Öls in dem Retarder ermittelt werden. Es sind auch noch andere Volumenströme mit der erfindungsgemäßen Anordnung ermittelbar.

Es ist auch möglich, dass die Staudruckmesseinrichtung als separates Anschlussstück oder dergleichen ausgeführt ist. Somit wird ein spezieller Adapter quasi als separates Messgerät konstruiert, welcher sich in die Kühlmittelverrohrung, in die Bremsmediumverrohrung oder dergleichen auf einfachste Weise integrieren lässt.

Um das Anschlussstück beziehungsweise den Adapter z.B. in die Kühlmittelverrohrung zu integrieren, kann gemäß einer nächsten Ausgestaltung der Erfindung vorgesehen sein, dass das Anschlussstück beidseitig über zumindest eine Flanschverbindung, zumindest eine Schraubverbindung und/oder zumindest eine Steckverbindung oder dergleichen jeweils mit einem freien Ende des entsprechenden Kühlmittelkanals verbunden wird.

Vorzugsweise kann die vorgeschlagene Anordnung in Fahrzeugen bei hydrodynamischen Strömungsmaschinen, wie z.B. Strömungsbremsen, Strömungskupplungen oder dergleichen eingesetzt werden. Es sind jedoch auch andere Einsatzgebiete denkbar.

Nachfolgend wird die vorliegende Erfindung anhand der Zeichnung näher erläutert. Es zeigen:
Fig. 1 eine geschnittene Teilansicht einer möglichen Ausführungsvariante einer erfindungsgemäßen Anordnung mit einer Staudruckmesseinrichtung in einem Kühlmittelkanal;
Fig. 2 eine geschnittene Draufsicht auf einen kreisförmigen Querschnitt des Kühlmittelkanals gemäß Fig. 1; und
Fig. 3 eine geschnittene Draufsicht auf einen rechteckigen Querschnitt des Kühlmittelkanals gemäß Fig. 1.

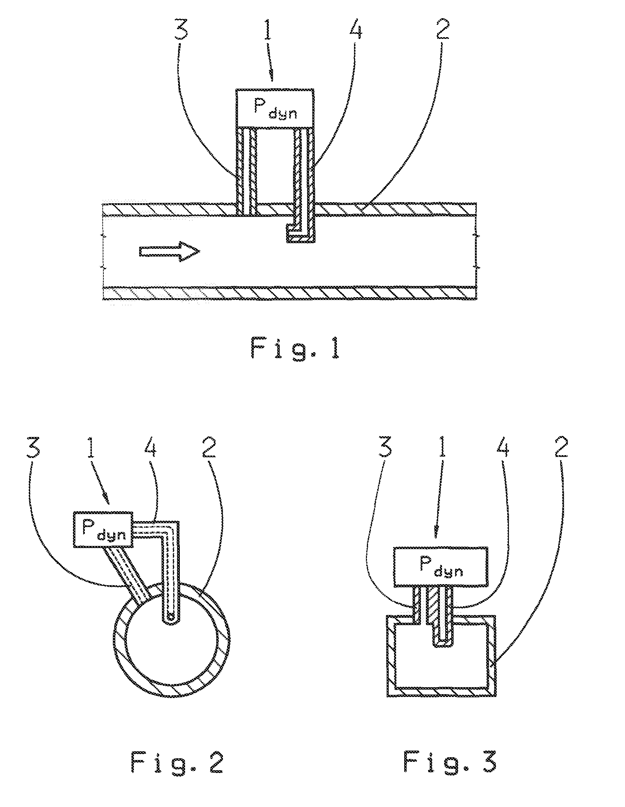

In den Fig. 1 bis 3 ist eine mögliche Ausführungsvariante einer erfindungsgemäßen Anordnung zum Ermitteln z.B. eines Kühlmittelvolumenstromes bei einem Kühlsystem eines Fahrzeuges mit einer hydrodynamischen Strömungsmaschine nur teilweise dargestellt.

Die vorgeschlagene Anordnung umfasst eine z.B. als Retarder ausgebildete Strömungsmaschine, mit der das Fahrzeug verschleißfrei abgebremst werden kann. Die dabei entstehende Wärme wird über ein Bremsmedium, z.B. Öl, abtransportiert. Das die entstehende Wärme abtransportierende Fluid wird zum Beispiel in einem nicht weiter dargestellten Wärmetauscher über ein Kühlmittel abgekühlt. Das Kühlmittel befindet sich in einem Kühlkreislauf eines Kühlsystems, welches über Kühlmitteikanäle 2 mit einem Fahrzeugkühler verbunden ist, der die Wärme des Kühlmittels an die Umgebungsluft abgibt. Die Kühlleistung des Kühlsystems bestimmt die maximale Bremsleistung des Retarders. Bei der erfindungsgemäßen Anordnung kann auch ein so genannter Wasserretarder eingesetzt werden, bei dem nur ein Medium als Kühlmedium und Bremsmedium verwendet wird.

Erfindungsgemäß ist vorgesehen, dass durch die Anordnung die Ermittlung des aktuellen Kühlmittelvolumenstromes ermöglicht wird, in dem zumindest eine Staudruckmesseinrichtung 1 zum Ermitteln eines dynamischen Druckanteiles P_{dyn} in der Strömung des Kühlmittels vorgesehen ist. Anhand des aktuell herrschenden dynamischen Druckanteils P_{dyn} in Abhängigkeit des vorgegebenen Querschnittes eines Kühlmittelkanals 2 kann jederzeit exakt der Volumenstrom in dem Kühlmittelkanal 2 und somit die zur Verfügung stehende Kühlleistung des Kühlkreislaufes ermittelt werden. Dadurch kann jederzeit die Bremsleistung den Gegebenheiten angepasst werden.

Die Staudruckmesseinrichtung 1 umfasst einen Messumformer und zwei Messrohre 3 und 4, Das erste Messrohr 3 ermittelt den statischen Druck Pₛₜₐₜ in dem Kühlmittelkanal 2, wobei das zweite Messrohr 4 den Totaldruck beziehungsweise den Staudruck bestimmt. Dazu werden die Messrohre 3 und 4 in den Kühlmittelkanal 2 geführt, so dass sie von der Kühlmittelströmung angeströmt werden. Der dynamischen Druckanteil P_{dyn} ergibt sich aus der Differenz zwischen Totaldruck beziehungsweise Staudruck und dem statischen Druck Pₛₜₐₜ und ist somit ein Maß für den Volumenstrom. Es sind auch andere Messanordnungen verwendbar, um die erfindungsgemäße Vorgehensweise bzw. das Bestimmen des Kühlmittelvolumenstromes zu realisieren.

Fig. 1 zeigt eine geschnittene Seitenansicht des Kühlmittelkanals 2, an dem die Staudruckmesseinrichtung 1 befestigt ist. In den Figuren 2 und 3 sind verschiedene Querschnittsformen des Kühlmittelkanals 2 gezeigt.

Es ist auch möglich, dass die Staudruckmesseinrichtung 1 als separates Anschlussstück beziehungsweise Adapter ausgeführt ist, wobei das Anschlussstück dem in Fig. 1 gezeigten Kühlmittelkanal 2 entspricht, wobei an jedem freien Ende des Kühlmittelkanals 2 Verbindungsmittel vorgesehen sind, um die beiden Enden des Anschlussstückes jeweils an ein freies Ende eines Kühlmittelkanals anzuschließen, um das Anschlussstück in einen Kühlmittelkanalkreislauf zu integrieren. Bei dieser Ausgestaltung ist das Anschlussstück quasi eine separate Messeinheit, welche in die Kühimittelverrohrung integriert wird. Als Verbindungsmittel können zum Beispiel Flanschverbindungen, Schraubverbindungen oder auch Steckverbindungen verwendet werden.

### Bezugszeichen

- 1: Staudruckmesseinrichtung
- 2: Kühlmittelkanal
- 3: Messrohr
- 4: Messrohr
- P_{dyn}: dynamischer Druckanteil
- Pₛₜₐₜ: statischer Druck

## Patentansprüche

1. Anordnung mit zumindest einem Kühlsystem für ein Fahrzeug und mit einer hydrodynamischen Strömungsmaschine, insbesondere mit einer Strömungsbremse oder mit einer Strömungskupplung, wobei die Strömungsmaschine zur Wärmeabfuhr mit dem Kühlsystem gekoppelt ist, **dadurch gekennzeichnet, dass** zumindest eine Staudruckmesseinrichtung (1) zur Unterstützung der Steuerung und/oder Regelung der Leistung der Strömungsmaschine vorgesehen ist.

2. Anordnung nach Anspruch 1, **dadurch gekennzeichnet, dass** die Staudruckmesseinrichtung (1) zum Messen des dynamischen Druckanteils (P_{dyn}) zumindest abschnittweise mit zumindest einem ersten Messrohr (3) zum Bestimmen des statischen Druckes (Pₛₜₐₜ) und mit zumindest einem zweiten Messrohr (4) zum Bestimmen des Staudruckes in die Strömung des Kühlmittels geführt ist, um aus dem dynamischen Druckanteil (P_{dyn}) in Abhängigkeit des jeweiligen Querschnittes den aktuellen Kühlmittelvolumenstrom zu ermitteln.

3. Anordnung nach Anspruch 2, **dadurch gekennzeichnet, dass** die Messrohre (3, 4) in einem Kühlmittelkanal (2) und/oder in einem Rohr eines Wärmetauschers des Kühlsystems angeordnet sind.

4. Anordnung nach einem der vorangehenden Ansprüche, **dadurch gekennzeichnet, dass** die Staudruckmesseinrichtung (1) zum Messen des dynamischen Druckanteils (P_{dyn}) zumindest abschnittweise mit zumindest einem ersten Messrohr (3) zum Bestimmen des statischen Druckes (Pₛₜₐₜ) und mit zumindest einem zweiten Messrohr (4) zum Bestimmen des Staudruckes in die Strömung des Bremsmediums der Strömungsbremse geführt ist, um aus dem dynamischen Druckanteil (P_{dyn}) in Abhängigkeit des jeweiligen Querschnittes den aktuellen Bremsmediumvolumenstrom zu ermitteln.

5. Anordnung nach einem der vorangehenden Ansprüche, **dadurch gekeinzeichnet, dass** die Staudruckmesseinrichtung (1) als separates Anschlussstück ausgeführt ist.

6. Anordnung nach Anspruch 5, **dadurch gekennzeichnet, dass** das Anschlussstück beidseitig über zumindest eine Flanschverbindung und/oder zumindest eine Schraubverbindung und/oder zumindest eine Steckverbindung mit einem Kühlmittelkanal (2) und/oder mit einem Bremsmediumkanal verbunden ist.
